# EUROPEAN PATENT APPLICATION

(11) **EP 4 501 534 A1**
(43) Date of publication of application: **05.02.2025**
(21) Application number: 23774399.2
(22) Date of filing: 28.02.2023
(51) Int. Cl.: B23Q 3/155, B23Q 17/00

(54) **TOOL REPLACING DEVICE**

(30) Priority: 25.03.2022 JP 2022049564
(71) Applicant: Nakamura-Tome Precision Industry Co., Ltd., Ishikawa 920-2195 (JP)
(72) Inventor: HASUNO Tsuyoshi, Hakusan-shi Ishikawa 920-2195 (JP); YOSHIDA Yuuki, Hakusan-shi Ishikawa 920-2195 (JP)
(74) Representative: Dummett Copp LLP
(86) International application number: PCT/JP2023/007242
(87) International publication number: WO 2023/181800

(57) **Abstract**

An object of the present invention is to provide, in a machine tool, a tool changer that can quickly investigate and recover a stop of a change arm when a failure occurs during a change operation of a tool post and the change arm stops. In order to accomplish the object, this invention provides a tool changer provided in a machine tool and including a change arm 5 that performs a tool change operation from a first tool 2 of a tool post 1 to a second tool 4 of a replacement tool holder 3, wherein when an abnormality is detected during the tool change operation from the first tool 2 to the second tool 4, the tool change operation that has been stopped is performed in reverse order to return the change arm 5 to a state before the abnormality detection.

## Description

### TECHNICAL FIELD

The present invention relates to a tool changer for changing a tool of a tool post provided in a machine tool or the like.

### BACKGROUND OF THE INVENTION

In a machine tool or the like, a tool of a tool post can be changed in order to realize various machining. The tool post is movable in the machine tool, and moves to a predetermined position when a tool of the tool post is changed.

As disclosed in Patent Literature 1, there is a tool changer having a change arm for performing a tool change operation of a tool post.

The tool change operation will be briefly described. The tool post moves to a predetermined position to change the tool of the tool post. Next, the change arm turns from an initial position to a tool gripping position so that a first tool attached to the tool post and a second tool held by a replacement tool holder can be gripped at both ends of the change arm. Next, the change arm grips the first tool and the second tool, and pulls out the first tool from the tool post and the second tool from the replacement tool holder through unclamping of the tool post and the replacement tool holder. Next, the arm is turned again so that the position of the first tool and the position of the second tool are switched. Next, the second tool is inserted into the tool post, the first tool is inserted into the replacement tool holder, the tool post clamps the second tool, and the replacement tool holder clamps the first tool.

### PRIOR ARTS

### Patent Documents

Patent Document 1: Japanese Patent Application Publication No. 2014-213439 A

### SUMMARY OF THE INVENTION

### OBJECTS OF THE INVENTION

However, a failure may occur during tool change operation, and the change arm may stop. It is necessary to investigate the cause of the stop of the change arm and restore the change arm so that processing can be performed again.

When the change arm is stopped in a state where a tool is gripped, whether the tool is to be clamped or unclamped by the tool post and the replacement tool holder cannot be determined only by the information obtained from the change arm in some cases.

In addition, it may not be possible to determine whether the tool post can be moved from a predetermined position where the tool is changed. Since these determinations may not be possible, there is a problem in that it is not possible to quickly investigate and recover the stop of the change arm.

Therefore, an object of the present invention is to provide, in a machine tool, a tool changer that can quickly investigate and recover a stop of a change arm when a failure occurs during a change operation of a tool post and the change arm stops.

### HOW TO ACCOMPILISH THE OBJECTS

A tool changer according to claim 1 of the present invention is a tool changer provided in a machine tool and including a change arm that performs an operation of changing a tool of a tool post, in which, when an abnormality is detected during a tool change operation, the tool change operation that has been stopped is performed in reverse order to return the change arm to a state before the abnormality detection.

With the tool changer according to claim 1, by performing the tool change operation that has been stopped in the reverse order, the change arm can be returned to the state before abnormality detection without determining whether the tool is clamped or unclamped by a tool post and a replacement tool holder. As a result, the tool is attached to the tool post and the replacement tool holder, and the tool can be immediately removed. For example, when it is necessary to confirm the state of the tool, the tool can be safely and promptly removed to investigate the cause of a failure.

In addition, by performing the change operation that has been stopped in the reverse order, it is possible to return to a state in which the tool post can be moved from a predetermined position where the tool is changed. As a result, the tool post to which the tool is attached can be moved to a position where the investigation of the cause of the failure can be easily performed.

The tool changer according to claim 2 is the tool changer according to claim 1 in which no tool remains in the change arm returned to the state before abnormality detection.

With the tool changer according to claim 2, in addition to a function similar to that of the tool changer according to claim 1, when no tool remains in the change arm, a tool is clamped at least by the tool post and the replacement tool holder. Therefore, in a case where it is necessary to confirm a tool state, it is possible to take measures such as visually confirming or removing the tool safely and promptly.

The tool changer according to claim 3 is the tool changer according to claim 1 or 2 in which the presence or absence of an abnormality is confirmed before a tool attached to the tool post is unclamped.

With the tool changer according to claim 3, in addition to a function similar to that of the tool changer according to claim 1 or 2, the presence or absence of an abnormality can be confirmed at an appropriate timing with a high possibility of occurrence of a failure.

The tool changer according to claim 4 is the tool changer according to any one of claims 1 to 3, in which the presence or absence of an abnormality is confirmed before a tool to be attached to the tool post is clamped.

With the tool changer according to claim 4, in addition to a function similar to that of the tool changer according to any one of claims 1 to 3, it is possible to confirm the presence or absence of an abnormality at an appropriate timing with a high possibility of occurrence of a failure in a process after the tool attached to the tool post is unclamped.

The tool changer according to claim 5 is the tool changer according to any one of claims 1 to 4, in which the machine tool including the tool changer is provided with an image display means, and the image display means displays a guide for performing the tool change operation that has been stopped in reverse order.

With the tool changer according to claim 5, in addition to a function similar to that of the tool changer according to any one of claims 1 to 4, a user can appropriately operate the machine tool along the guide displayed on the screen display means so that the tool change operation that has been stopped can be easily performed in the reverse order.

### ADVANTAGES OF THE INVENTION

The present invention can achieve an effect that, when a failure occurs during a change operation of a tool post and a change arm stops, it is possible to quickly investigate and recover the stop of the change arm.

### BRIEF EXPLANATION OF THE DRAWINGS

Fig. 1 is a schematic front view of a configuration related to machining and tool change in a machine tool having a tool changer according to an embodiment of the present invention.
Fig. 2 is a schematic perspective view illustrating a tool change operation by a change arm.
Fig. 3 is a schematic perspective view illustrating a tool change operation by a change arm.
Fig. 4 is a flowchart of a tool change operation by the tool changer according to the embodiment of the present invention.

### MODES FOR CARRYING OUT THE INVENTION

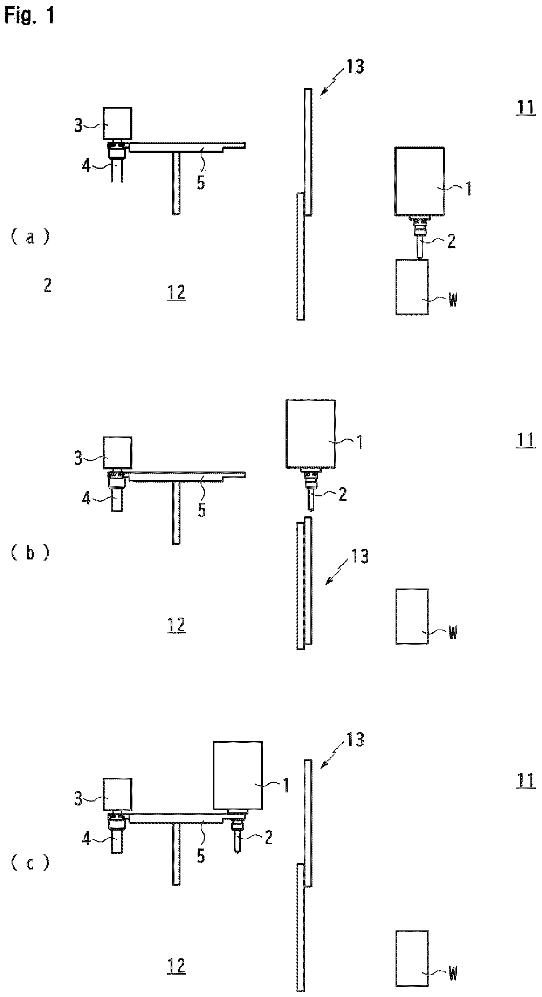

A tool changer according to an embodiment of the present invention will be described with reference to the drawings. Figs. 1 to 3 are schematic views, in which each element depicted is the minimum necessary for the description of the present invention.

A machine tool provided with the tool changer includes a machining space 11 in which a tool post 1 machines a workpiece W that is a workpiece, and a tool change space 12 in which a tool of the tool post 1 is changed. An opening/closing means 13 is provided between the machining space 11 and the tool change space 12.

The tool post 1 can move from the machining space 11 to the tool change space 12 or from the tool change space 12 to the machining space 11 when the opening/closing means 13 is open.

In order to improve the efficiency of machining the workpiece W, a plurality of tool posts may be installed in the machining space. By separating the machining space 11 and the tool change space 12 by the opening/closing means 13, it is possible to prevent coolant, scrapes, or chips scattered during machining by another tool post in the machining space 11 from flying to the tool post during tool change in the tool change space 12.

Therefore, it is possible to prevent foreign matter from adhering to or being mixed with a surface of a first tool 2 and a second tool 4 to be clamped and a surface on which a change arm 5 grips a tool, which will be described later. Therefore, it is possible to lower the possibility of occurrence of failure and realize stable tool change.

The tool change space 12 is provided with a replacement tool holder 3 and the change arm 5. The replacement tool holder holds the second tool 4.

As illustrated in Fig. 1(a), in the machining space 11, the workpiece W is machined with the tool post 1 to which the first tool 2 is attached.

After machining in the machining space 11, as shown in Fig. 1(b), the opening/closing means 13 is opened, and the tool post 1 moves from the machining space 11 to the tool change space 12 in order to change the tool.

As illustrated in Fig. 1(c), the tool post 1 is configured to allow the tool of the tool post 1 to be changed by the change arm 5 at a predetermined position in the tool change space 12.

The change of the tool at a predetermined position in the tool change space 12 of the tool post 1 will be described in more detail.

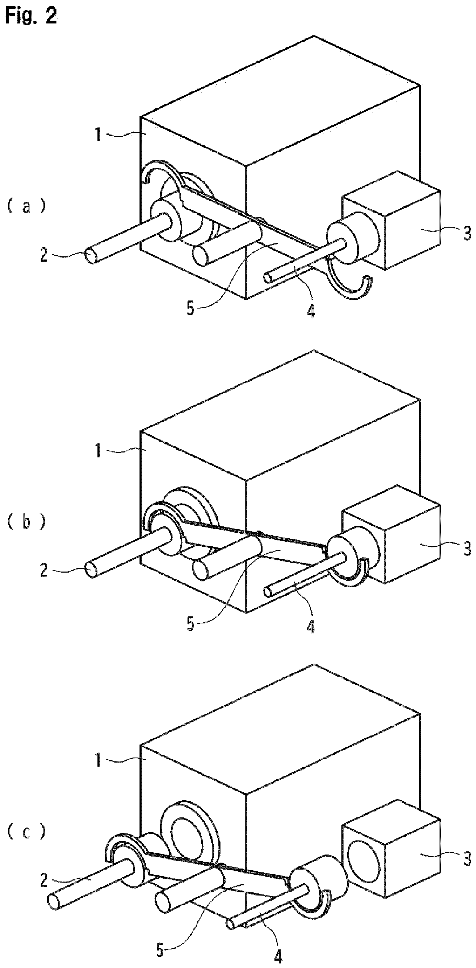

Fig. 2(a) illustrates a positional relationship among the tool post 1, the replacement tool holder 3, and the change arm 5 in a state where the tool post 1 has moved to a predetermined position. The first tool 2 is attached to the tool post 1. The replacement tool holder 3 holds the second tool 4.

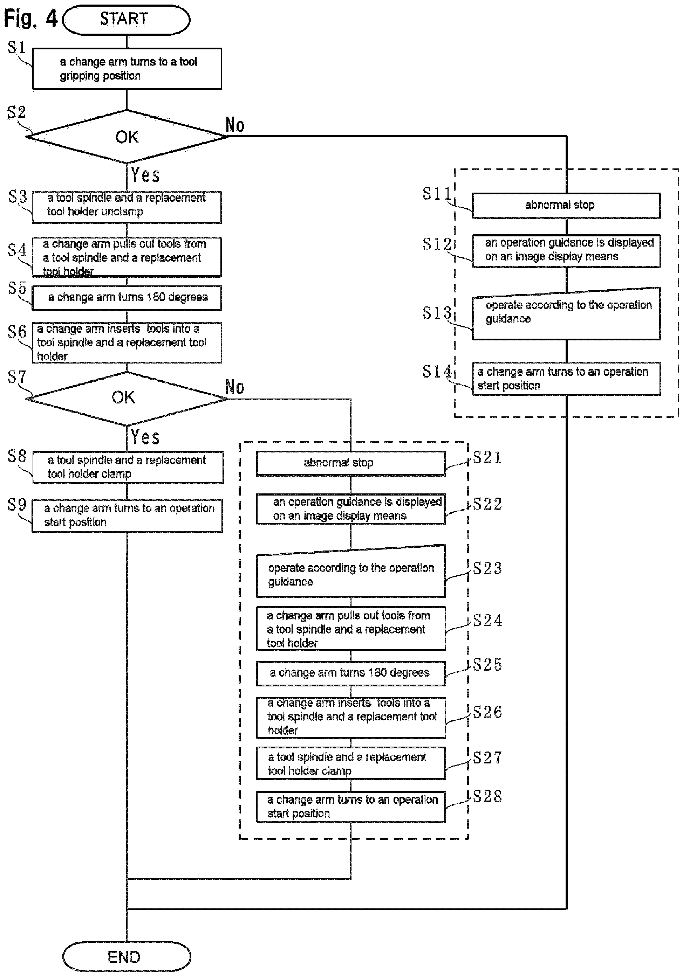

The change arm 5 turns to a tool gripping position as illustrated in Fig. 2(b) (S1 in Fig. 4). The first tool 2 and the second tool 4 are gripped at both ends of the change arm 5, respectively.

Next, it is confirmed that the change arm 5 has gripped the first tool 2 and the second tool 4 (S2 in Fig. 4), and then, unclamping of the first tool 2 at the tool post 1 and unclamping of the second tool 4 at the replacement tool holder 3 are performed (S3 in Fig. 4).

Next, as illustrated in Fig. 2(c), the change arm 5 pulls out the first tool 2 from the tool post 1 and the second tool 4 from the replacement tool holder 3 (S4 in Fig. 4).

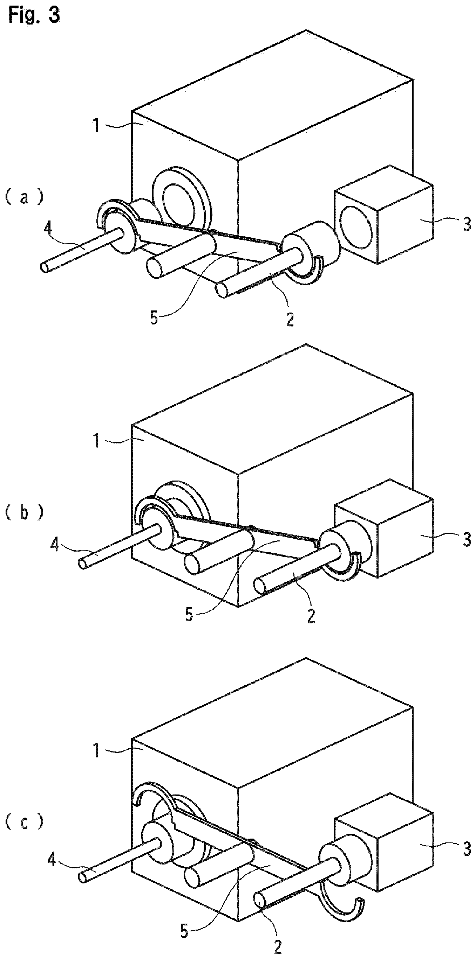

Next, as illustrated in Fig. 3(a), the change arm 5 turns 180 degrees, and the position of the first tool 2 and the position of the second tool 4 are switched (S5 in Fig. 4).

Next, as illustrated in Fig. 3 (b), the change arm 5 inserts the second tool 4 into the tool post 1 and the first tool 2 into the replacement tool holder 3 (S6 in Fig. 4).

Next, it is confirmed that the second tool 4 has been inserted into the tool post 1 and the first tool 2 has been inserted into the replacement tool holder 3 (S7 in Fig. 4), and then, clamping of the second tool 4 at the tool post 1 and clamping of the first tool 2 at the replacement tool holder 3 are performed (S8 in Fig. 4).

The change arm 5 turns to an operation start position as illustrated in Fig. 3(c) (S9 in Fig. 4).

The change of the tool attached to the tool post 1 from the first tool 2 to the second tool 4 is completed by the change operation as described above.

The tool post 1 for which tool change has been completed moves again from the tool change space 12 to the machining space 11, and preparation for further machining of the workpiece W is completed.

In the change operation described above, an abnormality may occur when confirming that the change arm 5 grips the first tool 2 and the second tool 4 in a state where the change arm 5 turns to the tool gripping position as illustrated in Fig. 2(b) (S2 in Fig. 4).

As illustrated in Fig. 4, when there is an abnormality in S2, the process proceeds to S11 to promptly stop the change operation. In step S12, an operation guidance is displayed on an image display means of the machine tool for a user of the machine tool. When the user operates the machine tool according to the operation guidance in S13, the change arm 5 in S14 is at the operation start position as illustrated in Fig. 2(a).

In the above change operation, when the change arm 5 inserts the second tool 4 into the tool post 1 and the first tool 2 into the replacement tool holder 3 as illustrated in Fig. 3(b), an abnormality may occur (S7 in Fig. 4).

As illustrated in Fig. 4, when there is an abnormality in S7, the process promptly proceeds to S21 to promptly stop the change operation. In step S22, an operation guidance is displayed on the image display means of the machine tool for the user of the machine tool. When the user operates the machine tool according to the operation guidance in S23, the change arm 5 is at the operation start position as illustrated in Fig. 2(a) through S24 to S28.

With the procedure of S11 to 14 and the procedure of S21 to S28 described above, the change arm 5 does not hold a tool and no tool remains. That is, the first tool 2 is attached to the tool post 1, and the second tool 4 is held by the replacement tool holder 3. When the cause of an abnormality is investigated, the position of a target tool can be immediately identified.

In the machine tool, it is required to widen the machining space as much as possible in order to increase the degree of freedom in machining of the workpiece W by the tool post. On the other hand, the outer shape of the machine tool is required to be made compact. Therefore, in a limited space in the machine tool, it is desirable to increase the size occupied by the machining space 11 and reduce the size occupied by the tool change space 12 as much as possible. Therefore, the tool change space 12 is relatively crowded with parts of the machine tool disposed therein. As a result, it may be difficult to investigate the cause of an abnormality of the tool post 1 in the tool change space 12.

In such a case, by moving the tool post to the machining space 11 where visual observation, confirmation, and the like of a target tool are relatively easy, it is possible to promptly investigate the cause of the abnormality.

In the above embodiment, the workpiece W is not particularly described in detail, but the workpiece may be rotatably gripped by a rotating chuck.

In the above embodiment, in the drawings, the case where there is one tool post in the machining space has been described, but the present invention is not limited thereto. A plurality of tool posts may be provided in the machining space.

In the above embodiment, the tool post has been described with reference to the schematic views, but the present invention is not limited thereto. The tool may be attached to a tool spindle to which the attached tool is rotatable, or a tool post of a comb blade type or a tool post of a turret type may be used.

In the above embodiment, the case where the tool post 1 can be moved in and out between the machining space 11 and the tool change space 12 has been described, but the present invention is not limited thereto. A part of the tool post necessary for change of a tool may be movable in and out between the machining space and the tool change space.

In the above embodiment, the replacement tool holder has been described with reference to the schematic views, but the present invention is not limited thereto. The replacement tool holder may be a part of a turret or a part of a tool magazine constituting an automatic tool changer.

In the above embodiment, the case where the change arm 5 can simultaneously grip and turn two tools, the first tool 2 and the second tool 4, has been described, but the present invention is not limited thereto. The change arm may be capable of simultaneously gripping and turning three or more tools.

In the above embodiment, the case where the change arm 5 turns 180 degrees and the position of the first tool 2 and the position of the second tool 4 are switched has been described, but the present invention is not limited thereto. The change arm may switch the position of the first tool with the position of the second tool by a motion other than turning of a robot arm or the like.

### Reference Signs List

- 1: tool post
- 2: first tool
- 3: replacement tool holder
- 4: second tool
- 5: change arm
- 11: machining space
- 12: tool change space
- 13: opening/closing means
- W: workpiece

## Claims

1. A tool changer provided in a machine tool and including a change arm that performs an operation of changing a tool of a tool post, wherein
when an abnormality is detected during a tool change operation and the change arm stops,
the tool change operation that has been stopped is performed in reverse order to return the change arm to a state before the abnormality detection.

2. The tool changer according to claim 1, wherein no tool remains in the change arm returned to the state before abnormality detection.

3. The tool changer according to claim 1 or 2, wherein presence or absence of an abnormality is confirmed before a tool attached to the tool post is unclamped.

4. The tool changer according to any one of claims 1 to 3, wherein presence or absence of an abnormality is confirmed before a tool to be attached to the tool post is clamped.

5. The tool changer according to any one of claims 1 to 4, wherein
the machine tool including the tool changer is provided with an image display means, and
the image display means displays a guide for performing the tool change operation that has been stopped in reverse order.
